# EUROPÄISCHE PATENTANMELDUNG

(11) **EP 0 916 913 A2**
(43) Veröffentlichungstag der Anmeldung: **19.05.1999**
(21) Anmeldenummer: 98121395.2
(22) Anmeldetag: 11.11.1998
(51) Int. Cl.: F24J 3/08

(54) **Verfahren und Vorrichtung zur Erzeugung von nutzbarer Wärmeenergie**

(30) Priorität: 14.11.1997 AT 1929/97
(71) Anmelder: ELIN EBG Elektrotechnik GmbH, 4020 Linz (AT)
(72) Erfinder: Atzgerstorfer, Kurt, 4020 Linz (AT)
(74) Vertreter: Rieberer, Stefan, Dipl.-Ing.

(57) **Zusammenfassung**

Ein Verfahren und eine Vorrichtung zur Erzeugung nutzbarer Wärmeenergie mit zumindest einer, in ein aufgelassenes Tiefbohrloch, insbesondere ein Erdöl- oder Erdgasbohrloch, eingeführte, daran angepaßte, zumindest abschnittsweise wärmeleitende Tiefensonde (1), welche zumindest einen Kanal (2) aufweist, durch welchen eine wärmeleitende Flüssigkeit, z.B. eine Sole, im wesentlichen bis zu dem tiefsten Punkt der Sonde (1) geführt und dabei auf die geothermische Umgebungstemperatur im Erdinneren erwärmt wird. In dieser Sonde (1) oder in einer weiteren Sonde ist ein zumindest abschnittsweise wärmeisolierter Kanal vorgesehen, durch welchen die erwärmte Flüssigkeit zurück zur Erdoberfläche gefördert und über einen Wärmetauscher, erforderlichenfalls über eine Wärmepumpe (6), nutzbar gemacht wird. Die aus den Sonden (1) entnehmbare Wärmeenergie kann mit beliebigen anderen Energieerzeugungseinrichtungen (7,11) gekoppelt und an beliebige Verbraucher geliefert werden. In den Flüssigkeitskreislauf des Sondensystems kann überdies die Abwärmenutzung industrieller Prozesse integriert werden. Durch die Nutzung bereits bestehender Bohrlöcher kann Wärmeenergie im Vergleich zu herkömmlichen Geothermieanlagen besonders kostengünstig genutzt werden.

## Beschreibung

Die vorliegende Erfindung bezieht sich auf ein Verfahren und eine Vorrichtung zur Erzeugung von nutzbarer Wärmeenergie.

Der Weltenergiebedarf wird etwa zu 90 % aus der Verbrennung fossiler Energieträger wie Kohle, Öl und Erdgas gedeckt. Der damit verbundene Schadstoffausstoß stellt eine enorme Belastung für unsere Umwelt dar. Daher ist es ein Ziel der vorliegenden Erfindung, durch Schaffung eines neuartigen Verfahrens zur Erzeugung nutzbarer Wärmeenergie einen Beitrag zum Energiesparen zu Liefern, wobei zugleich die Belastung der Umwelt verringert werden soll.

Dies wird bei einem Verfahren zur Erzeugung nutzbarer Wärmeenergie dadurch erreicht, daß ein verfügbares, aufgelassenes Tiefbohrloch, insbesondere ein nicht genutztes Erdöl-oder Erdgasbohrloch, ausgewählt und in dieses Tiefbohrloch eine daran angepaßte, zumindest abschnittsweise wärmeleitende Tiefensonde eingeführt und verankert wird, daß durch diese Sonde eine wärmeleitende Flüssigkeit im wesentlichen bis zu dem tiefsten Punkt der Sonde geführt, geothermisch erwärmt und zurück an die Erdoberfläche gefördert wird, und daß der Wärmeinhalt dieser Flüssigkeit als nutzbare Wärmeenergie bereitgestellt wird. Insbesondere wird der Wärmeinhalt der wärmeleitenden Flüssigkeit über einen Wärmetauscher an ein Speicher- und/oder Transportmedium, insbesondere eine zirkulierende Flüssigkeit, abgegeben. Eine Vorrichtung zur Erzeugung nutzbarer Wärmeenergie ist demnach dadurch gekennzeichnet, daß sie zumindest ein aufgelassenes Tiefbohrloch, insbesondere ein Erdöl- oder Erdgasbohrloch, aufweist, in welches eine daran angepaßte zumindest abschnittsweise wärmeleitende Tiefensonde eingeführt und verankert ist, daß die Sonde zumindest einen Kanal aufweist, durch welchen eine wärmeleitende Flüssigkeit im wesentlichen bis zu dem tiefsten Punkt der Sonde führbar ist, und diese Sonde oder eine weitere Sonde zumindest einen weiteren, zumindest abschnittsweise wärmeisolierten Kanal aufweist, durch welchen die Flüssigkeit zurück zur Erdoberfläche förderbar ist, und daß ein Mittel zum Nutzen des Wärmeinhaltes dieser Flüssigkeit vorgesehen ist.

Durch die geothermische Nutzung von Erdwärme kann eine wertvolle Energiequelle erschlossen werden, wobei durch die Ausnutzung von bestehenden Bohrlöchern in vorteilhafter Weise keine Kosten für die Herstellung der Tiefbohrungen anfallen. Mit zunehmender Tiefe steigt im Erdinneren die Temperatur. Bei einer Nutzung dieser Wärme steht eine Energiequelle zur Verfügung, die, wie Wasserkraft, als erneuerbarer Energieträger eine umfassende Bedeutung erlangen kann. Durch den Wegfall von CO2-Emissionen und Lärmemissionen bzw. durch die ständige Verfügbarkeit besitzt die Geothermie starke Vorteile gegenüber konventionellen Energieträgern wie Gas und Heizöl. Aber auch gegenüber der Solarenergie ergibt sich ein Vorteil durch geringeren Platzbedarf und gegenüber der Windenergie durch Geräuscharmut und Umweltverträglichkeit. Die Nutzung der Erdwärme gliedert sich in eine aus dem oberflächennahen Erdreich gewinnbare Wärme und einer oberflächenfernen Erdwärmenutzung. Je nach Tiefe und Temperaturniveau kann eine direkte Nutzung erfolgen oder in Verbindung mit Anlagen zur Anhebung auf ein nutzbares Energieniveau, z.B. Warmepumpen, biogene Energieerzeugungseinrichtung od.dgl. Je nach Temperaturniveau sind die Verwendungsmöglichkeiten vielfältig und reichen von der Warmwasserbereitung und Heizung von einzelnen Gebäuden bis hin zur Versorgung mit Nah- und Fernwärmenetzen. Besonders vorteilhaft ist eine kaskadenförmige Nutzung der Energie.

Weltweit bestehen eine große Anzahl von Erdsonden, die zur Öfförderung dienen. Sind diese Sonden ausgefördert, müssen sie nach bestimmten Zeiten liquidiert d.h. zementiert werden. Jährlich werden auf diese Art und Weise viele Sonden stillgelegt. Da diese Erdsonden zum Teil bereits in der Nähe von potentiellen Wärmeabnehmern liegen, ist es vorteilhaft, gerade diese als Wärmelieferanten nutzbar zu machen. Die durchschnittliche Sondentiefe beträgt 500 - 3000 m. Daher kann davon ausgegangen werden, daß rund 50% der vorhandenen Quellen für Geothermiezwecke geeignet sind und für die vorliegende Erfindung genutzt werden können.

Bei einer vorteilhaft einsetzbaren Ausführungsvariante der vorliegenden Erfindung wird der Wärmeinhalt der wärmeleitenden Flüssigkeit zur Anhebung der Temperatur nachträglich durch eine Wärmepumpe geführt. Alternativ dazu kann der Wärmeinhalt der wärmeleitenden Flüssigkeit zur Anhebung der Temperatur nachträglich durch eine Biomasse-Energieerteugungseinrichtung geführt werden. Der dabei erzeugte Wärmeinhalt der wärmeleitenden Flüssigkeit kann sodann zur Nutzung in ein Fernwärmenetz eingespeist oder an eine kommunale Einrichtung, einen Industrie-, Gewerbe- oder landwirtschaftlichen Betrieb abgegeben werden. Ebenso besteht die Möglichkeit, in einem Fernwärmenetz die Temperatur der darin zirkulierenden Flüssigkeit dezentral in der Nähe eines Verbrauchers durch ein oder mehrere Wärmepumpen auf ein verwertbares Energieniveau anzuheben.

Entsprechend der Anforderung kann somit das Temperaturniveau individuell an die Bedürfnisse des Verbrauchers angepaßt werden.

Mit der Erdwärme steht somit eine Energiequelle zur Verfügung, die erneuerbar und besonders Umweltfreundlich ist und dadurch zukünftig zur kostengünstigen Bereitstellung von Wärmeenergie führen kann, z.B. für:
- die Raumheizung von Einzelobjekten wie z.B. kommunale Objekte wie Schulen, Reihenhäuser u.dgl.,
- die Stützung kommunaler Fernwärmeanlagen, zur Versorgung großflächiger Bereiche wie ganze Siedlungen und Ortschaften,
- die landwirtschaftliche Nutzung, insbesonders die Gewächshausbeheizung, könnte hier von einer ständig zur Verfügung stehenden Wärme profitieren, es könnte z.B. mehrfache Ernten pro Jahr ermöglichen,
- die Beheizung von Fischzuchtanlagen, wobei der Ausbau von hochwertigen Anlagen möglich werden konnte, die hochwertige Produkte wie Hummer, Krabben und andere gezüchtete Meeresfrüchte hervorbringen

Mit einer kaskadenförmigen Nutzung des Temperaturniveaus kann überdies ein Höchstmaß an Wirtschaftlichkeit erreicht werden.

Konstruktiv besteht die Möglichkeit, die Tiefensonde für ein geschlossenes System mit einem Vor- und Rücklauf doppelwandig auszubilden, wobei der für den Rücklauf der wärmeleitenden Flüssigkeit vorgesehene Kanal zumindest abschnittsweise wärmeisoliert ist. Vorzugsweise ist der für den Rücklauf vorgesehene Kanal in einem zentralen Abschnitt der Sonde angeordnet und von dem für den Vorlauf bestimmten Kanal umgeben. Dabei ist die der geologischen Umgebung zugewandte Wand des Kanals, durch welchen die wärmeleitende Flüssigkeit in die Tiefe geführt ist, zumindest abschnittsweise wärmeleitend ausgebildet. In diesem geschlossenen System kann zur Gewinnung nutzbarer Wärmeenergie eine hierfür besonders geeignete Flüssigkeit, z.B. eine Sole, bestehend aus einem reinen Wasser-Glykolgemisch, ohne Beeinträchtigung der Umwelt eingesetzt werden.

Alternativ zu der oben beschriebenen konstruktiven Möglichkeit, kann zum Fordern der wärmeleitenden Flüssigkeit in die Tiefe eine Sonde mit zumindest einem Kanal und zum Fördern der wärmeleitenden Flüssigkeit zurück zur Erdoberfläche eine weitere, in einem Abstand angeordnete Sonde mit zumindest einem Kanal vorgesehen sein, wobei die für den Rücklauf der wärmeleitenden Flüssigkeit vorgesehene Sonde einen zumindest abschnittsweise wärmeisolierten Kanal aufweist. Dieses Einrohrsystem, bei der mit einer Sonde Flüssigkeit, z.B. Wasser, aus dem Erdinneren entnommen und mit der anderen Sonde rückgeführt (reinjiziert) wird, zeichnet sich durch einen gegenüber dem Zweirohrsystem der 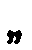 Kalten Fernwärme" wesentlich geringeren Installationsaufwand aus. Auch bei dieser Art der Umweltenergienutzung sind der Vielfältigkeit keine techn. Grenzen gesetzt. Beispielsweise kann mittels solcher Sonden Wärmeenergie, welche vorerst nicht benötigt wird, im Erdinneren gespeichert und bei Bedarf wieder entnommen werden.

Weitere Merkmale und Vorteile der vorliegenden Erfindung gehen aus der folgenden Beschreibung nicht einschränkender Ausführungsbeispiele für das erfindungsgemäße Verfahren bzw. die zugehörige Vorrichtung hervor, wobei auf die beiliegenden Figuren Bezug genommen wird, die folgendes zeigen:
- Fig. 1: eine schematische Darstellung für ein Ausführungsbeispiel mit einer Tiefensonde für ein Zweirohrsystem,
- Fig. 2: eine schematische Darstellung für ein Ausführungsbeispiel mit mehreren Tiefensonden gemäß Figur 1 und
- Fig. 3: eine schematische Darstellung für ein Ausführungsbeispiel mit zwei Tiefensonden für ein Einrohrsystem.

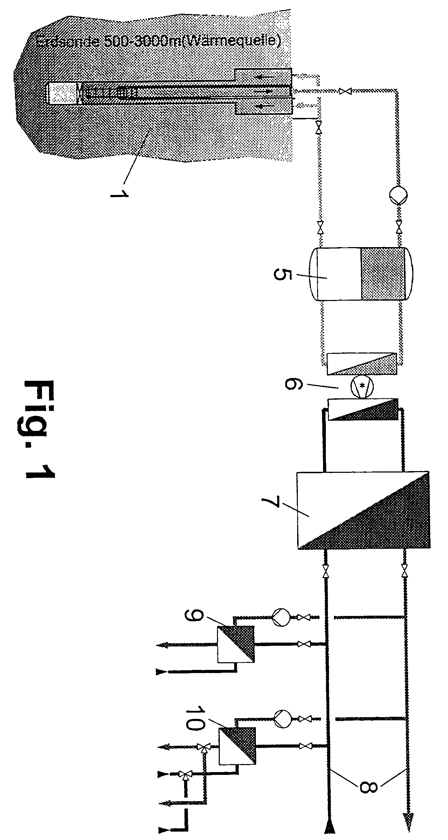

Vorerst wird auf die Fig. 1 Bezug genommen, in welcher eine Vorrichtung zur Erzeugung nutzbarer Wärmeenergie der erfindungsgemäßen Art dargestellt ist. Die Vorrichtung weist eine Tiefensonde 1 auf, welche in ein aufgelassenes Tiefbohrloch, z. B. eine Erdöl-oder Erdgasbohrung, eingesetzt wird. Die Länge der Tiefensonde ist abhängig von der Bohrtiefe und beträgt ca. 500 bis 3000 m. Die Tiefensonde 1 ist konzentrisch aufgebaut und weist einen ringförmigen äußeren Kanal 2, in welchem eine Sole von der Erdoberfläche bis zum tiefsten Punkt der Sonde 1 geführt und dabei erwärmt wird, und einen inneren Kanal 3 auf, in welchem die Sole von dem tiefsten Punkt der Sonde zurück zur Erdoberfläche geführt wird. Zwischen dem äußeren Kanal 2 und dem inneren Kanal 3 ist zumindest entlang eines der Erdoberfläche zugewandten Abschnittes eine Isolierung 4 angeordnet, z. B. eine Luftkammer, um den Temperaturverlust der Sole bei Durchströmen des Kanals 3 gering zu halten.

Die beispielsweise aus einem Wasser- Glykolgemisch bestehende Sole wird an der Erdoberfläche über einen Pufferspeicher oder eine hydraulische Weiche 5 zu einem Wärmetauscher, insbesondere eine Wärmepumpe 6 geführt, mittels welcher das Temperaturniveau der Sole auf ein nutzbares Niveau angehoben wird. Die Sonde 1 bildet mit dem Pufferspeicher bzw. der hydraulischen Weiche 5 und der Wärmepumpe 6 einen geschlossenen Kreislauf, in welchem die Sole bei Durchströmen des Kanals 2 auf die geothermisch im Erdinneren vorliegende Umgebungstemperatur erwärmt und mit dieser Temperatur, abzüglich etwaiger Temperaturverluste, entlang des Kanals 3 zur Erdoberfläche gefördert wird.

Gegebenenfalls kann zur Erhöhung der Temperatur weiters eine Biogene Energieerzeugungseinrichtung, z.B. ein Bio-Brennstoffkessel 7 nachgeschaltet sein. Eine solche Einrichtung oder eine andere Wärmeerzeugungseinrichtung kann auch anstelle der Wärmepumpe 6 vorgesehen sein.

Die nutzbare Wärmeenergie kann nun in ein Fernwärmenetz 8 eingespeist oder einem anderen Verbraucher zugeführt werden. Insbesondere kann eine kaskadenförmige Nutzung der Wärmeenergie vorgesehen sein, z. B. über einen Wärmetauscher 9 zur Raumheizung bei etwa 70 bis 95 °C und über einen weiteren Wärmetauscher 10 zur nachfolgenden landwirtschaftlichen Nutzung bei ca. 50 bis 70 °C oder zur Fischzucht bei ca. 25 bis 50 °C.

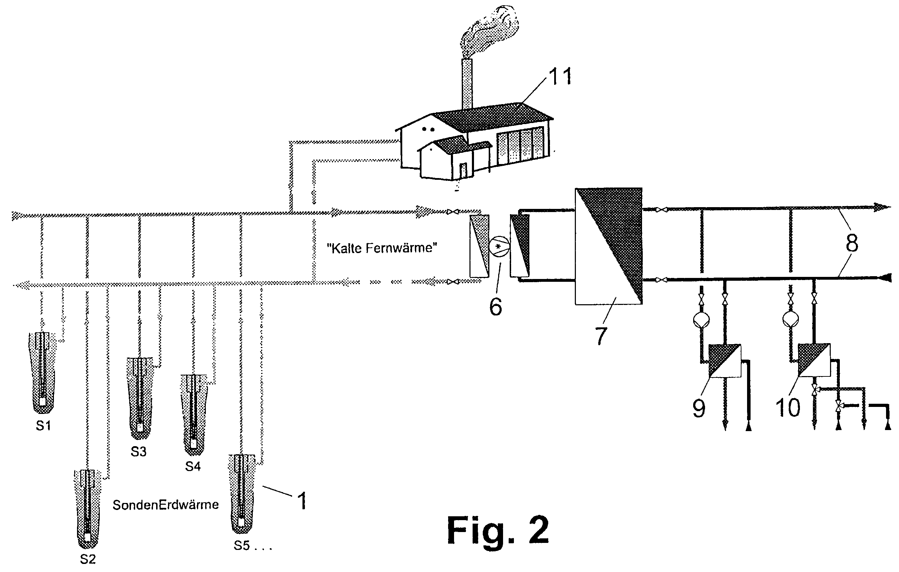

In Fig. 2 ist eine Vorrichtung der erfindungsgemäßen Art dargestellt, bei welcher eine Vielzahl von Sonden 1, nämlich S1, S2, S3,... dargestellt sind, die untereinander parallel zu einem geschlossenen Kreislauf zusammengeschaltet sind und über einen Wärmetauscher, z.B. eine Wärmepumpe 6, an ein Verbrauchernetz angeschlossen sind. Die Sonden S1, S2, S3,... und das Verbrauchernetz entsprechen im wesentlichen den in Fig. 1 dargestellten und weiter oben beschriebenen Einrichtungen. Zusätzlich ist bei diesem Ausführungsbeispiel in den Solenkreislauf der Sonden S1, S2, S3,... ein Wärmetauscher 11 zur Entnahme von Prozeßabwärme einer industriellen oder gewerblichen Einrichtung integriert.

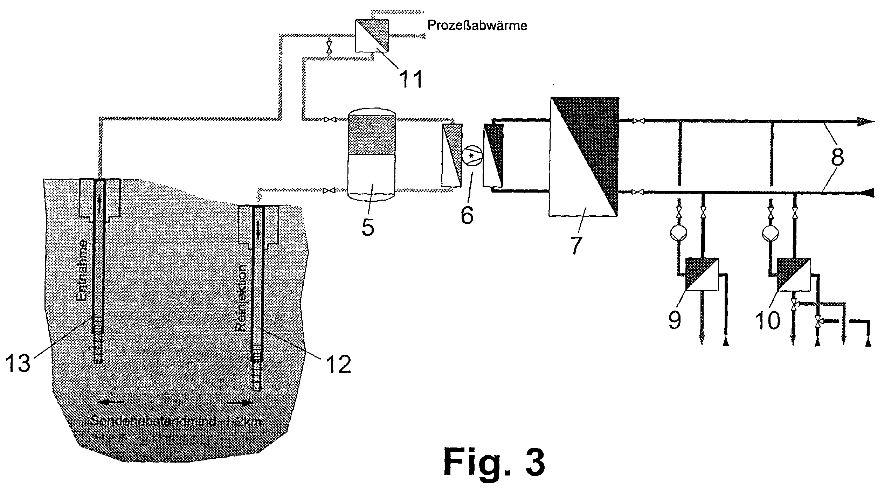

In Fig. 3 ist ein weiteres Ausführungsbeispiel für eine erfindungsgemäße Vorrichtung dargestellt, bei welchem zumindest zwei Sonden 12, 13 vorgesehen sind, die nur je einen Kanal aufweisen. Durch die Sonde 13 wird Flüssigkeit, z.B. Kavernenwasser, aus dem Erdinneren bei einer geothermisch vorliegenden Temperatur entnommen und an die Erdoberfläche gefördert, über einen Pufferspeicher oder eine hydraulische Weiche 5 zu einer Wärmepumpe 6 geführt und durch die Sonde 12 wieder in das Erdinnere reinjiziert. Der Kanal der Sonde 13 ist zumindest im erdoberflächennahen Bereich isoliert ausgebildet. Der Abstand der beiden Sonden 12, 13 voneinander kann je nach geologischer Formation ein bis mehrere Kilometer betragen. Analog zu Fig. 2 besteht die Möglichkeit, eine oder mehrere Sonden 13 zur Entnahme von Flüssigkeit und ein oder mehrere Sonden 12 zum Reinjizieren von Flüssigkeit vorzusehen.

Die Nutzung der Erdwärme kann auch bei dem Ausführungsbeispiel von Fig. 3 mit einer Prozeßabwärmenutzung gemäß Fig. 2 gekoppelt sein.

Die oben mit Bezug auf die Figuren beschriebenen Ausführungsbeispiele sind keineswegs einschränkend. Im Rahmen der vorliegenden Erfindung besteht eine große Anzahl von Variationsmöglichkeiten, die abhängig von den geologischen Verhältnissen und den erforderlichen Temperaturen eingesetzt werden können. Beispielsweise kann bei ausreichender geologischer Temperatur auf eine nachträgliche Erhöhung des Temperaturniveaus gänzlich verzichtet werden. Ebenso besteht die Möglichkeit, Abwärme, die nicht benötigt wird, über Sonden gemäß Fig. 3 in geologischen Schichten zu speichern und bei Bedarf zu entnehmen. Weiters kann die erfindungsgemäße Vorrichtung mit jeder beliebigen Einrichtung zur Erzeugung von Wärmeenergie und mit jeder beliebigen Einrichtung zum Verteilen und Nutzen solcher Wärmeenergie kombiniert werden.

## Patentansprüche

1. Verfahren zur Erzeugung nutzbarer Wärmeenergie, **dadurch gekennzeichnet, daß** ein nutzbares aufgelassenes Tiefbohrloch, insbesondere ein Erdöl- oder Erdgasbohrloch, ausgewählt und in dieses aufgelassene Tiefbohrloch eine daran angepaßte, zumindest abschnittsweise wärmeleitende Tiefensonde eingeführt und verankert wird, **daß** durch diese Sonde eine wärmeleitende Flüssigkeit, z.B eine Sole, im wesentlichen bis zu dem tiefsten Punkt der Sonde geführt, geothermisch erwärmt und zurück an die Erdoberfläche gefördert wird, **und daß** der Wärmeinhalt dieser Flüssigkeit als nutzbare Wärmeenergie bereitgestellt wird.

2. Verfahren nach Anspruch 1, **dadurch gekennzeichnet, daß** der Wärmeinhalt der wärmeleitenden Flüssigkeit über einen Wärmetauscher an ein Transport-und/oder Speichermedium, insbesondere eine zirkulierende Flüssigkeit, abgegeben wird.

3. Verfahren nach Anspruch 1 oder 2, **dadurch gekennzeichnet, daß** der Wärmeinhalt der wärmeleitenden Flüssigkeit zur Anhebung der Temperatur auf ein verwertbares Temperaturniveau nachträglich durch eine Wärmepumpe geführt wird.

4. Verfahren nach Anspruch 1 oder 2, **dadurch gekennzeichnet, daß** der Wärmeinhalt der wärmeleitenden Flüssigkeit zur Anhebung der Temperatur auf ein verwertbares Temperaturniveau nachträglich durch eine biogene Energieerzeugungseinrichtung geführt wird.

5. Verfahren nach Anspruch 2, 3 oder 4, **dadurch gekennzeichnet, daß** der Wärmeinhalt der wärmeleitenden Flüssigkeit in ein Fernwärmenetz eingespeist oder einer kommunalen Einrichtung, einem Industrie- oder Gewerbebetrieb zur Verfügung gestellt wird.

6. Verfahren nach Anspruch 5, **dadurch gekennzeichnet, daß** die Temperatur in der Nähe eines Verbrauchers durch ein oder mehrere Wärmepumpen auf ein verwertbares Temperaturniveau angehoben wird.

7. Verfahren nach Anspruch einem der Ansprüche 1 bis 6, **dadurch gekennzeichnet, daß** die wärmeleitende Flüssigkeit durch eine doppelwandige Sonde in einem geschlossenen Kreislauf in die Tiefe und wieder zur Erdoberfläche geführt wird, wobei der für den Rücklauf der warmeleitenden Flüssigkeit vorgesehene Kanal zumindest abschnittsweise isoliert ist.

8. Verfahren nach einem der Ansprüche 1 bis 6, **dadurch gekennzeichnet, daß** die warmeleitende Flüssigkeit durch eine erste Sonde zur Erdoberfläche gefördert und durch eine in einem Abstand von der ersten Sonde angeordnete zweite Sonde wieder in die Tiefe geführt wird, wobei die für den Rücklauf der wärmeleitenden Flüssigkeit vorgesehene erste Sonde zumindest abschnittsweise wärmeisoliert ist.

9. Verfahren nach einem der vorigen Ansprüche, **dadurch gekennzeichnet, daß** die nutzbare Wärmeenergie einer kaskadenförmigen Nutzung mit zumindest zwei unterschiedlichen Temperaturniveaus zugeführt wird, z.B. als Heizwärme und für landwirtschaftliche Nutzung.

10. Vorrichtung zur Erzeugung nutzbarer Wärmeenergie, **dadurch gekennzeichnet, daß** sie zumindest ein aufgelassenes Tiefbohrloch, insbesondere ein Erdöl- oder Erdgasbohrloch, aufweist, in welches eine daran angepaßte, zumindest abschnittsweise wärmeleitende Tiefensonde eingeführt und verankert ist, **daß** diese Sonde zumindest einen Kanal aufweist, durch welchen eine wärmeleitende Flüssigkeit, z.B. eine Sole, im wesentlichen bis zu dem tiefsten Punkt der Sonde führbar ist, und diese Sonde oder eine weitere Sonde zumindest einen weiteren, zumindest abschnittsweise wärmeisolierten Kanal aufweist, durch welchen die Flüssigkeit zurück zur Erdoberfläche förderbar ist, **und daß** ein Mittel zum Nutzen des Wärmeinhaltes dieser Flüssigkeit vorgesehen ist.

11. Vorrichtung nach Anspruch 10, **dadurch gekennzeichnet, daß** das Mittel zum Nutzen des Wärmeinhaltes ein Wärmetauscher ist, mittels welchem der Wärmeinhalt der wärmeleitenden Flüssigkeit an ein Speicher- und/oder Transportmedium, insbesondere eine zirkulierende Flüssigkeit, abgebbar ist.

12. Vorrichtung nach Anspruch 10 oder 11, **dadurch gekennzeichnet, daß** das Mittel zum Nutzen des Wärmeinhaltes der wärmeleitenden Flüssigkeit zur Anhebung der Temperatur auf ein verwertbares Niveau weiters eine Wärmepumpe aufweist.

13. Vorrichtung nach Anspruch 10 oder 11, **dadurch gekennzeichnet, daß** das Mittel zum Nutzen des Wärmeinhaltes der wärmeleitenden Flüssigkeit zur Anhebung der Temperatur auf ein verwertbares Niveau weiters eine Biogene-Energieerteugungseinrichtung aufweist.

14. Vorrichtung nach Anspruch 11, 12 oder 13, **dadurch gekennzeichnet, daß** das Mittel zum Nutzen des Wärmeinhaltes mit einem Fernwärmenetz, einer kommunalen Einrichtung, einem Industrie- oder Gewerbebetrieb verbunden ist.

15. Vorrichtung nach Anspruch 14, **dadurch gekennzeichnet, daß** in dem Fernwärmenetz zur Anhebung der Temperatur auf ein verwertbares Niveau dezentral in der Nähe eines Verbrauchers ein oder mehrere Wärmepumpen angeordnet sind.

16. Vorrichtung nach einem der Ansprüche 10 bis 15, **dadurch gekennzeichnet, daß** die Tiefensonde doppelwandig ausgebildet ist, wobei der für den Rücklauf der wärmeleitenden Flüssigkeit vorgesehene Kanal zumindest abschnittsweise wärmeisoliert ist.

17. Vorrichtung nach Anspruch 16, **dadurch gekennzeichnet, daß** der für den Rücklauf vorgesehene Kanal in einem zentralen Abschnitt der Sonde angeordnet und von dem Kanal umgeben ist, mittels welchem die wärmeleitende Flüssigkeit in die Tiefe geführt wird.

18. Vorrichtung nach Anspruch 17, **dadurch gekennzeichnet, daß** die der geologischen Umgebung zugewandte Wand des Kanals, durch welchen die wärmeleitende Flüssigkeit in die Tiefe geführt ist, zumindest abschnittsweise wärmeleitend ausgebildet ist.

19. Vorrichtung nach einem der Ansprüche 10 bis 18, **dadurch gekennzeichnet, daß** eine Mehrzahl von Sonden über einen Wärmetauscher miteinander verbunden sind.

20. Vorrichtung nach einem der Ansprüche 10 bis 15, **dadurch gekennzeichnet, daß** zum Fördern der wärmeleitenden Flüssigkeit an die Erdoberfläche zumindest eine erste Sonde mit zumindest einem Kanal vorgesehen ist, **und daß** zum Fördern der wärmeleitenden Flüssigkeit in die Tiefe in einem Abstand von der ersten Sonde zumindest eine zweite Sonde mit zumindest einem Kanal vorgesehen ist, wobei die für den Rücklauf der wärmeleitenden Flüssigkeit vorgesehene Sonde einen zumindest abschnittsweise wärmeisolierten Kanal aufweist.

21. Vorrichtung nach Anspruch 20, **dadurch gekennzeichnet, daß** die zum Fördern der wärmeleitenden Flüssigkeit in die Tiefe vorgesehene Sonde einen zumindest abschnittsweise wärmeleitenden Kanal aufweist.

22. Vorrichtung nach einem der Ansprüche 10 bis 21, **dadurch gekennzeichnet, daß** sie über einen Wärmetauscher mit einer Einrichtung zum Abführen von Prozeßabwärme industrieller oder gewerblicher Prozesse verbunden ist.
